# EUROPÄISCHE PATENTSCHRIFT

(11) **EP 2 215 370 B1**
(45) Veröffentlichungstag und Bekanntmachung des Hinweises auf die Patenterteilung: **23.03.2011**
(21) Anmeldenummer: 08856054.5
(22) Anmeldetag: 24.11.2008
(51) Int. Cl.: F16B 5/02

(54) **HALTENOCKEN FÜR EINEN DREHVERSCHLUSS**
RETAINING CAM FOR A ROTARY FASTENER
CAME DE RETENUE POUR UNE FERMETURE ROTATIVE

(30) Priorität: 07.12.2007 DE 102007059148
(43) Veröffentlichungstag der Anmeldung: 11.08.2010
(73) Patentinhaber: SFS intec Holding AG, 9435 Heerbrugg (CH)
(72) Erfinder: SCHENDEL, Olav, 70567 Stuttgart (DE)
(86) Internationale Anmeldenummer: PCT/EP2008/066078
(87) Internationale Veröffentlichungsnummer: WO 2009/071459

(56) Entgegenhaltungen:
- DE-A1- 3 735 250
- GB-A- 786 644
- US-A- 2 991 816
- US-A- 5 326 206

## Beschreibung

Die Erfindung betrifft einen Haltenocken für einen Drehverschluss zum Verbinden von Bauteilen, wobei der Haltenocken ein Gehäuse aufweist, das an einer Grundplatte schwenkbar gelagert ist, über die der Haltenocken fest mit einem der Bauteile verbindbar ist, und in das eine Schraube eingesetzt ist, auf die ein mit einem anderen der Bauteile drehbar verbundener Verschlussbolzen aufschraubbar ist, wobei der Schraube wenigstens ein Federelement zum Erzeugen einer elastischen Vorspannung für eine Verdrehsicherung des Verschlussbolzens zugeordnet ist.

Ein Drehverschluss der vorgenannten Art ist ein in der Luft- und Raumfahrt bekanntes Normteil. Der Haltenocken dieses Drehverschlusses entspricht der Norm prEN 6092 der AECMA(The European Association of Aerospace Industries - Standardization, Brüssel, Belgien, Edition P1, Entwurf vom 22.03.04). Der Verschlussbolzen des Drehverschlusses entspricht der Norm prEN 6088 der AECMA, (Edition P1, April 2006). Solche in der Luft- und Raumfahrt eingesetzten Drehverschlüsse sind zur Übertragung von hohen Kräften ausgelegt, zum Beispiel einer maximalen Zugbelastung von 6300 N und einer maximalen Scherbelastung von 11000 N. Diese bekannten Drehverschlüsse werden bei einem Flugzeug beispielsweise eingesetzt zum lösbaren Verbinden einer Innenverkleidungsplatte oder einer Wartungsklappe mit der Rumpfstruktur oder Zelle. Der Haltenocken wird mittels seiner Grundplatte an der Rumpfstruktur befestigt, zum Beispiel mittels Nieten. Der Verschlussbolzen wird an einer Innenverkleidungsplatte oder Wartungsklappe drehbar, aber verliersicher befestigt. Der Verschlussbolzen hat eine Bohrung mit einem zweigängigen Innengewinde. Die in den Haltenocken drehfest eingesetzte Schraube hat ein zweigängiges Außengewinde. Eine einwandfreie Verbindung des Verschlussbolzens mit dem Haltenocken lässt sich im Stand der Technik nur herstellen, wenn deren Achsen miteinander fluchten, also wenn z. B. zwei miteinander zu verbindende Bauteile parallel zueinander sind. An der Fluchtung der Achsen oder der Parallelität der Bauteile kann es aber bereits aufgrund der an sich zulässigen Toleranzen fehlen. Bei der Montage, wird der Verschlussbolzen den Haltenocken, der gegenüber der Grundplatte begrenzt schwenkbeweglich ist, gegen die Grundplatte ziehen. Wenn die Achsen nicht miteinander fluchten, wird der Haltenocken versuchen, sich mit seiner kreisringförmigen Auflagefläche, welche eine dem Verschlussbolzen zugewandte stirnseitige Öffnung seines Gehäuses umgibt, gegen die Grundplatte zu ziehen, wobei sich der Haltenocken mit dieser Auflagefläche an der Grundplatte parallel zur Rumpfstruktur auszurichten versucht. Wenn die Achse nicht in eine rechtwinkelige Lage zur Rumpfstruktur gelangen kann, können sich in dem Drehverschluss Spannungen ergeben, da der Haltenocken nicht vollflächig an der Grundplatte aufliegen wird. Die nicht vollflächige Auflage kann sogar dazu führen, dass das Gehäuse des Haltenockens, das relativ dünn ausgebildet ist, beschädigt wird. Darüber hinaus gibt es Anwendungsfälle, in denen gebogene Innenverkleidungspanele an der Rumpfstruktur zu befestigen sind. Bislang muss dafür im Stand der Technik besonderer Aufwand getrieben werden, um die strukturseitigen Haltenocken in eine für die Verschraubung mit dem Verschlussbolzen geeignete Lage zu bringen, durch die verhindert wird, dass es zu den vorgenannten Spannungen oder zu der vorgenannten Beschädigung des Gehäuses des Haltenockens kommen kann. Ebenso muss besonderer Aufwand getrieben werden, dass der Haltenocken innerhalb der zulässigen Toleranzen bei der Verschraubung mit dem Verschlussbolzen mit seiner Auflagefläche in volle Anlage an der Grundplatte gelangt. Erschwerend kommt hinzu, dass solche Drehverschlüsse für eine häufige Wiederverwendbarkeit ausgelegt sind. Üblicherweise muss ein solcher Drehverschluss 1500 Verschraubungszyklen aushalten.

Es sind Vierteldrehverschlüsse bekannt (zum Beispiel aus dem Katalog Alcoa-Fastening Systems, 2007), bei denen die vorgenannten Schwierigkeiten dadurch vermieden werden, dass der Haltenocken mittels der Grundplatte unbeweglich mit der Rumpfstruktur od. dgl. verbunden wird und dass ein Verschlusszapfen eingesetzt wird, der am vorderen Ende mit einem Kreuzstift versehen ist. Beim Schließen gleitet der Kreuzstift des Verschlusszapfens über eine Rampe des Haltenockens und gelangt nach einer Viertelumdrehung in eine Raststellung, in welcher er unter der elastischen Vorspannung eines Federelements gehalten wird. Ein solcher Drehverschluss ist einfacher aufgebaut und einfacher montierbar, ist aber nur für wesentlich geringere Zugbelastungen zugelassen.

Ein dem Haltenocken der eingangs genannten Art ähnlicher Haltenocken ist weiter aus dem Dokument US 2,991,816 A bekannt. Bei diesem bekannten Haltenocken wird eine Mutter mit einem Führungsteil eingesetzt, um Löcher in Platten aufeinander auszurichten.

Weiter ist ein ähnlicher Haltenocken aus dem Dokument GB 786 644 A bekannt. Die Ausbildung ist bei dem bekannten Haltenocken so getroffen, dass es unnötig ist, ein Bolzenteil und ein Verankerungsteil in genaue gegenseitige Ausrichtung zu bringen, bevor sie miteinander in Eingriff gebracht werden können. Zu diesem Zweck hat der Haltenocken einen ringförmigen konischen Zapfen der von dem Bolzenteil vorsteht und in eine entsprechende konische Buchse in dem Verankerungsteil eingreift. Das Verankerungsteil hat einen Flansch, über den es an eine Grundplatte angenietet ist. Ein Zwischenstück hat eine teilkugelförmige Lagerfläche, die auf einem konischen Sitz an dem Verankerungsteil aufsitzt. Oben ist bereits dargelegt worden, dass eine Auflagefläche an der Grundplatte in voller Anlage sein sollte. Die teilkugelförmige Lagerfläche kann aber mit dem konischen Sitz nur in eine Linienberührung kommen.

Weiter ist ein Verfahren zum Kompensieren einer Schraubenlochfehlausrichtung aus dem Dokument US-A-5 326 206 bekannt. Hier geht es um das Herstellen einer Befestigung, bei welcher einige Schraubenlöcher in einer oberen von zwei miteinander zu verbindenden Platten leicht fehlausgerichtet sein können. Die Schraubenlöcher sind überdimensioniert und haben konische Wände. Die Schrauben haben an der Unterseite ihres Kopfes eine abgerundete Fläche die in Linienkontakt mit der konischen Wand kommt, wenn jede Schraube in eine Mutter hinein angezogen wird. In diesem Fall wird der Linienkontakt angestrebt, um eine starke scherfeste Befestigung zu erzielen.

Aufgabe der Erfindung ist es, einen Haltenocken der eingangs genannten Art so auszubilden, dass größere Winkelablagen zwischen dessen Achse und der Achse des Verschlussbolzens problemlos kompensiert werden können.

Diese Aufgabe ist bei einem Haltenocken der eingangs genannten Art erfindungsgemäß durch die im kennzeichnenden Teil des Patentanspruchs 1 angegebenen Merkmale gelöst.

Bei dem Haltenocken nach der Erfindung ist gewährleistet, dass der Haltenocken stets auf seinem gesamten Umfang eine vollflächige Auflage hat. Ermöglicht wird das durch die zwischen der Grundplatte und der benachbarten Stirnseite des Gehäuses des Haltenockens angeordnete Kugelscheibe, auf der das Gehäuse schwenkbar ist, bis die Achse der Schraube des Haltenockens und die Achse des Verschlussbolzens miteinander fluchten. Der Haltenocken kann dadurch zwar in eine Schieflage gegenüber der Grundplatte gelangen, behält aber seine vollflächige Auflage an der Kugelscheibe bei, welche auf ihrer entgegengesetzten Seite eine Planfläche hat, mit der sie in vollflächiger Anlage an der Grundplatte bleibt. Es ist klar, dass die Winkelablagen der nicht fluchtenden Achsen, die dadurch kompensiert werden können, zwar in einem begrenzten Bereich liegen müssen, dass in diesem begrenzten Bereich jedoch stets die vollflächige Anlage des Haltenockens (über die Kugelscheibe) an der Grundplatte gewährleistet bleibt, im Gegensatz zum Stand der Technik, wo bereits eine geringfügige Winkelablage zu einer Verkantung und einer damit nicht mehr vollflächigen Anlage des Haltenockens an der Grundplatte führt. Ein mit dem Haltenocken nach der Erfindung ausgerüsteter Drehverschluss ermöglicht auch problemlos die Befestigung gebogener Panele od. dgl. an der Rumpfstruktur. Da variable Winkelablagen kompensiert werden können, braucht weniger Aufwand getrieben zu werden, um strukturseitig den Haltenocken in der richtigen Lage zu befestigen. Generell bietet der Haltenocken nach der Erfindung eine zusätzliche Möglichkeit, Toleranzen auszugleichen. Da bei dem Haltenocken nach der Erfindung das Gehäuse an einer der Grundplatte benachbarten stirnseitigen Öffnung mit einander diametral gegenüberliegenden Tragvorsprüngen versehen ist, die in benachbarte Tragöffnungen der Grundplatte eingreifen, lässt sich problemlos die Kugelscheibe zwischen der Grundplatte und dem Gehäuse anordnen, indem die Tragöffnungen der Grundplatte einfach entsprechend größer ausgebildet werden. Da bei dem Haltenocken nach der Erfindung eine sich um die stirnseitige Öffnung erstreckende Auflagefläche des Gehäuses komplementär zu einer Kugelfläche der Kugelscheibe ausgebildet ist, ist die vollflächige Anlage des Gehäuses ungeachtet der Winkellage des Gehäuses relativ zu der Grundplatte stets gewährleistet.

Vorteilhafte Ausgestaltungen des Haltenockens nach der Erfindung bilden die Gegenstände der abhängigen Ansprüche.

Wenn in einer Ausgestaltung des Haltenockens nach der Erfindung die Kugelscheibe mit einander diametral gegenüberliegenden weiteren Tragvorsprüngen versehen ist, die auch in die Tragöffnungen der Grundplatte eingreifen, erleichtert das die Montage und Halterung der Kugelscheibe zwischen der Grundplatte und dem Gehäuse.

Wenn in einer weiteren Ausgestaltung des Haltenockens nach der Erfindung das Gehäuse gegen eine sich durch die Mitte der Tragplatte und der Tragöffnungen erstreckende Mittenebene um insgesamt 10° verschwenkbar ist, wird der in der Praxis zu erwartende Bereich von Winkelablagen erfahrungsgemäß abgedeckt.

Wenn in einer weiteren Ausgestaltung des Haltenockens nach der Erfindung das Gehäuse um eine sich quer zu der Mittenebene erstreckende Achse um insgesamt 10° verschwenkbar ist, kann der Haltenocken beliebig orientierte Winkelablagen zwischen den Achsen der zu verschraubenden Drehverschlussteile kompensieren.

Wenn in einer weiteren Ausgestaltung des Haltenockens nach der Erfindung die Verschwenkbarkeit des Gehäuses durch ausreichendes Spiel wenigstens der Tragvorsprünge des Gehäuses in den Tragöffnungen der Grundplatte ermöglicht wird, braucht, abgesehen von der zusätzlich vorzusehenden Kugelscheibe, der Haltenocken gegenüber der genormten Ausführung nur geringfügig modifiziert zu werden, indem entsprechend größere Tragöffnungen der Grundplatte gewählt werden.

Wenn in einer weiteren Ausgestaltung des Haltenockens nach der Erfindung die in das Gehäuse eingesetzte Schraube aus einem hochfesten Werkstoff besteht, lassen sich problemlos höhere Kräfte als mit dem bekannten Haltenocken übertragen. Zweckmäßig wird in diesem Fall auch der Drehverschluss aus einem hochfesten Werkstoff hergestellt.

Ausführungsbeispiele der Erfindung werden im Folgenden unter Bezugnahme auf die Zeichnungen näher beschrieben. Es zeigen
- Fig. 1: einen mit einem Haltenocken nach der Erfindung versehenen Drehverschluss und zwei zu durch diesen zu verbindende Bauteile in einer auseinandergezogenen perspektivischen Darstellung,
- Fig. 2: einen mit dem Haltenocken nach der Erfindung versehenen Dreh- verschluss in Teillängsschnittdarstellungen, und zwar in Fig. 2a einen an einer Rumpfstruktur befestigten Haltenocken und in Fig. 2b einen an einer Innenverkleidungsplatte befestigten Verschluss- bolzen,
- Fig. 3: ein Detail A der Darstellung in Fig. 2a,
- Fig. 4: in zwei um 90° gegeneinander versetzten Seitenansichten des Drehverschlusses nach Fig. 1 (unter Weglassung der miteinander verbundenen Bauteile) die maximal möglichen Schwenkstellungen des dargestellten Ausführungsbeispiels des Haltenockens nach der Erfindung gegenüber dessen Grundplatte,
- Fig. 5: den Haltenocken nach der Erfindung in perspektivischer Darstel- lung in einer Ansicht von unten,
- Fig. 6: den Haltenocken nach Fig. 5 in einer Seitenansicht,
- Fig. 7: den Haltenocken nach der Erfindung in einer Schnittansicht nach der Linie VII-VII in Fig. 6,
- Fig. 8: den Haltenocken nach der Erfindung in einer auseinandergezoge- nen perspektivischen Darstellung,
- Fig. 9: eine Kugelscheibe des Haltenockens nach der Erfindung in einer Draufsicht auf deren Kugelfläche,
- Fig. 10: die Kugelscheibe in einer Schnittansicht nach der Linie X-X in Fig. 9,
- Fig. 11: in perspektivischer Darstellung ein Gehäuse des Haltenockens nach der Erfindung,
- Fig. 12: eine Längsschnittansicht des Gehäuses nach Fig. 11,
- Fig. 13: ein Detail A der Darstellung in Figl. 12 und
- Fig. 14: das Gehäuse nach Fig. 12 in Draufsicht.

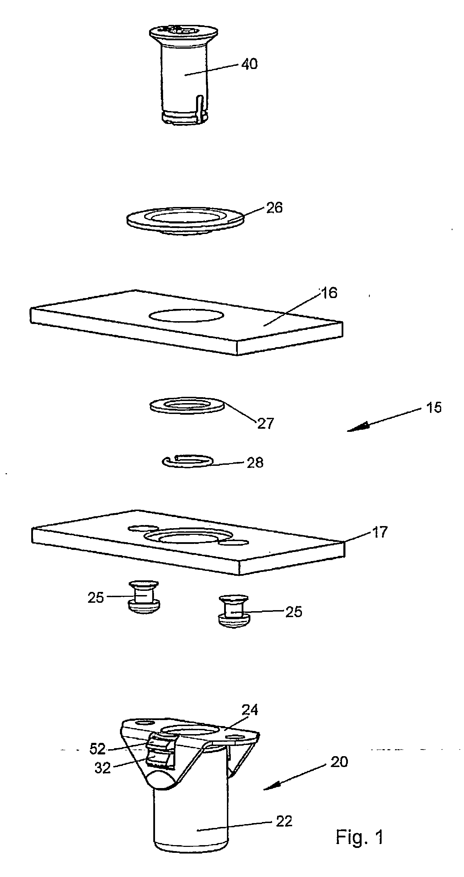

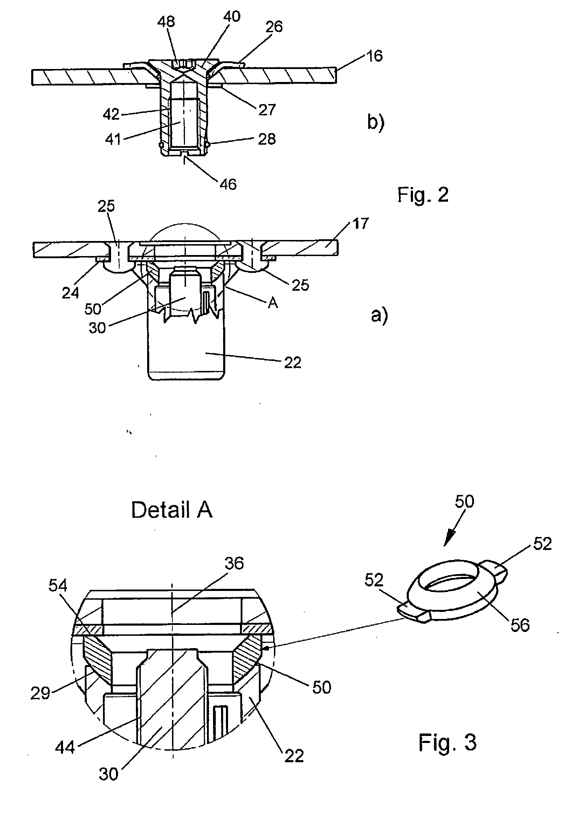

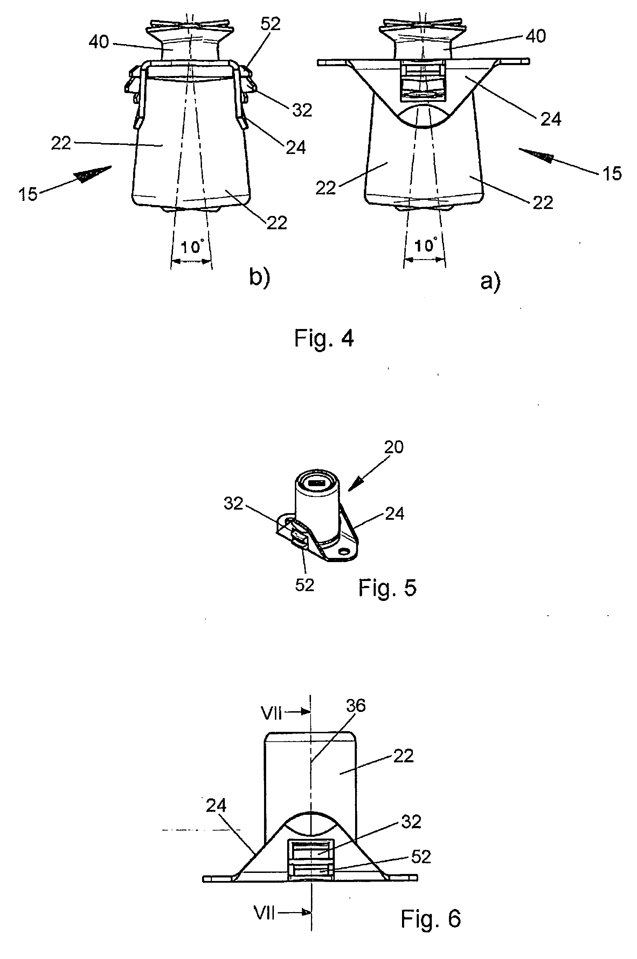

Fig. 1 zeigt in perspektivischer und auseinandergezogener Darstellung einen insgesamt mit 15 bezeichneten Drehverschluss zum Verbinden von zwei Bauteilen 16 und 17 unter einer elastischen Vorspannung. Das Bauteil 16 kann eine Innenverkleidungsplatte in der Kabine eines Flugzeuges sein, wobei dann das Bauteil 17 die Rumpfstruktur symbolisiert. Der Drehverschluss 15 umfasst einen insgesamt mit 20 bezeichneten Haltenocken und einen Verschlussbolzen 40. Gemäß der Darstellung in den Fig. 2a und 2b, auf die nun zusätzlich Bezug genommen wird, weist der Haltenocken 20 ein Gehäuse 22 auf und eine Grundplatte 24, an welcher das Gehäuse 22 schwenkbar gelagert ist. Über die Grundplatte 24 ist der Haltenocken 20 fest mit dem Bauteil 17 verbindbar, in dem dargestellten Ausführungsbeispiel mit Hilfe von zwei Nieten 25. Die fertig hergestellte Nietverbindung ist in Fig. 2a gezeigt. Der Verschlussbolzen 40 ist in einer Bohrung in dem Bauteil 16 drehbar, aber unverlierbar gehalten, und zwar mit Hilfe von zwei Scheiben 26, 27 und eines Federringes 28. In das Gehäuse 22 des Haltenockens 20 ist eine Schraube 30 (Fig. 2a) drehfest eingesetzt, was weiter unten noch näher erläutert ist. Der Verschlussbolzen 40 hat gemäß Fig. 2b eine Bohrung 41 mit einem Innengewinde 42, mit dem er auf ein Außengewinde 44 der Schraube 30, dargestellt in Fig. 3, aufschraubbar ist. Gemäß der Darstellung in den Fig. 2 und 3 stützt sich das Gehäuse 22 an der Grundplatte 24 über eine Kugelscheibe 50 verschwenkbar ab. Das wird nun unter Bezugnahme auf die Darstellung in den übrigen Fig. 5-14 näher beschrieben.

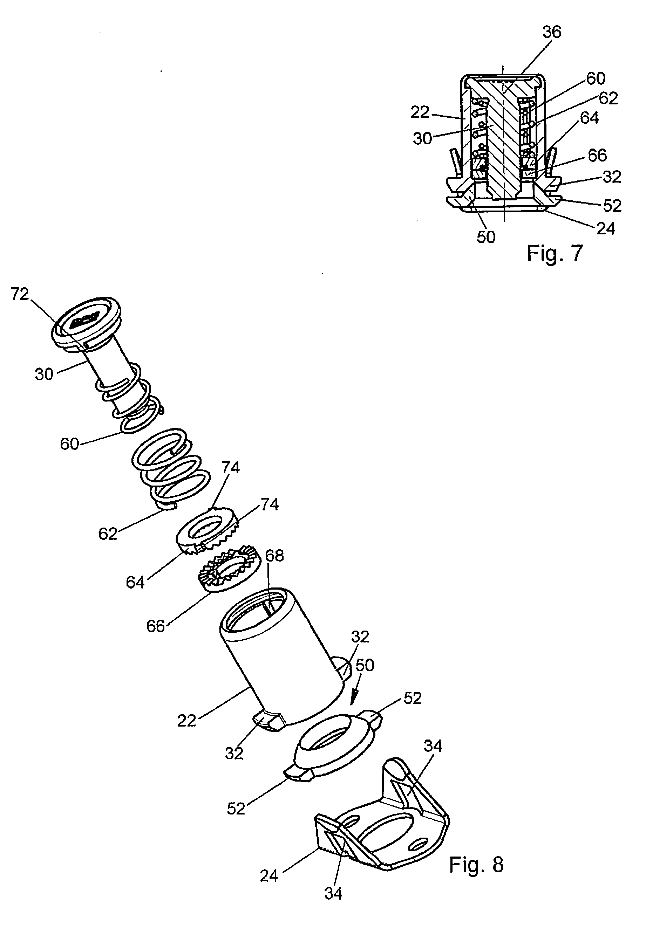

Fig. 5 zeigt den Haltenocken 20 in perspektivischer Darstellung in einer Ansicht von unten. Fig. 6 zeigt den Haltenocken 20 in einer Seitenansicht, Fig. 7 in einer Längsschnittansicht nach der Linie VII-VII in Fig. 6 und Fig. 8 in auseinandergezogener Darstellung. Das Gehäuse 22 ist an einer der Grundplatte 24 benachbarten stirnseitigen Öffnung mit zwei einander diametral gegenüberliegenden Tragvorsprüngen 32 versehen, die in zwei benachbarte Tragöffnungen 34 der Grundplatte 24 eingreifen. Die Kugelscheibe 50 ist mit einander diametral gegenüberliegenden weiteren Tragvorsprüngen 52 versehen, die auch in die Tragöffnungen 34 der Grundplatte 24 eingreifen, wie es in den Fig. 4-7 zu erkennen ist. Die Tragöffnungen 34 der Grundplatte 24 sind so bemessen, dass das Gehäuse 22 gegen eine sich durch die Mitte 36 der Tragplatte 24 und der Tragöffnungen 34 erstreckende Mittenebene um insgesamt 10° verschwenkbar ist. Der Haltenocken 20 ermöglicht aufgrund dieser Konstruktion einen Winkelausgleich von bis zu 5° pro Seite. Fig. 4 zeigt in zwei um 90° gegeneinander versetzten Seitenansichten des Drehverschlusses 15 nach Fig. 1 (unter Weglassung der miteinander verbundenen Bauteile 16, 17) die maximal möglichen Schwenkstellungen des dargestellten Ausführungsbeispiels des Haltenockens 20 gegenüber dessen Grundplatte 24. In den Fig. 4a und 4b ist der Drehverschluss 15 jeweils um 5° nach links und um 5° nach rechts, also jeweils um 10° verschwenkt dargestellt. Die Verschwenkbarkeit des Gehäuses 22 des Haltenockens 20 wird durch ausreichendes Spiel wenigstens der Tragvorsprünge 32 des Gehäuses 22 in den Tragöffnungen 34 der Grundplatte 24 ermöglicht. Es reicht an sich aus, dass die Tragvorsprünge 32 des Gehäuses 22 ausreichendes Spiel haben, denn die Kugelscheibe 50 bleibt an die Unterseite der Grundplatte 24 angedrückt, wenn das Gehäuse 22 gegenüber der Grundplatte 24 verschwenkt wird und somit die Tragvorsprünge 32 in den Tragöffnungen 34 verschwenkt werden.

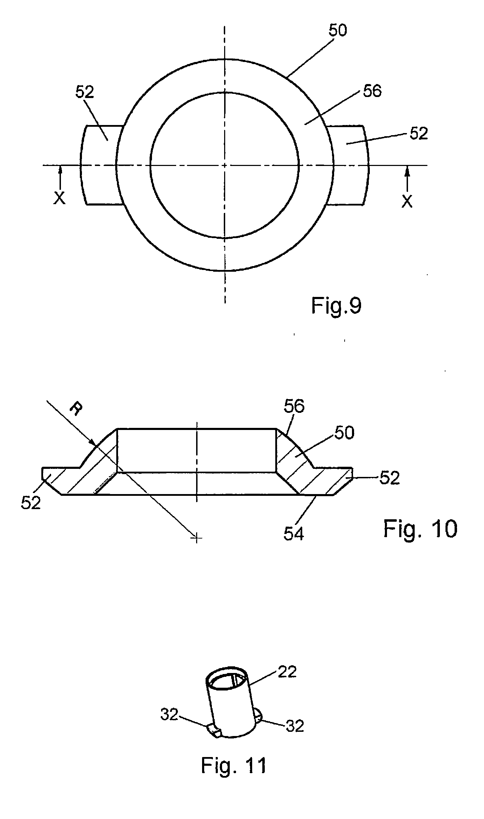

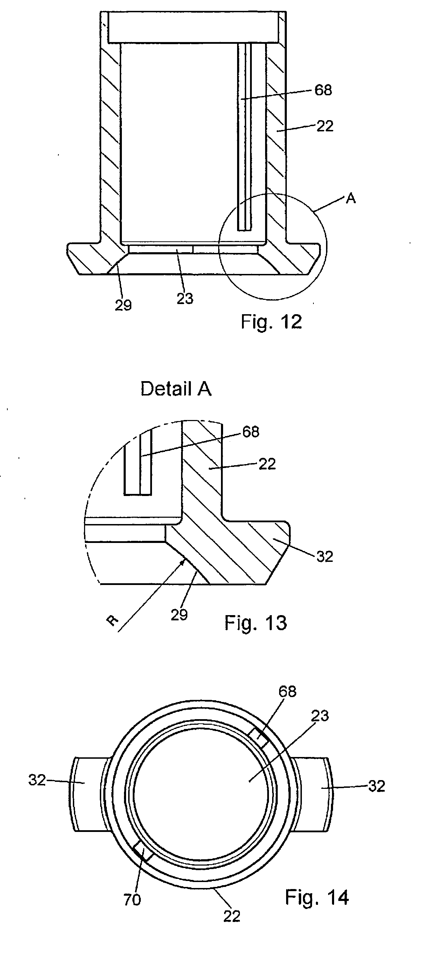

Zum Gewährleisten der Anlage der Kugelscheibe 50 an der Grundplatte 24 und der verschwenkbaren vollflächigen Anlage des Gehäuses 22 an der Kugelscheibe 50 hat die Kugelscheibe gemäß der Darstellung in den Fig. 9 und 10 eine Planfläche 54 und auf ihrer zu der Planfläche entgegengesetzten Seite eine Kugelfläche 56, die einen Krümmungsradius R aufweist. Die Kugelfläche 56 ist, genauer gesagt, die ringförmige Oberfläche eines Abschnitts einer Kugel mit dem Radius R. Gemäß der Darstellung in den Fig. 12-14 ist eine sich um eine stirnseitige, der Grundplatte 24 benachbarte Öffnung 23 erstreckende Auflagefläche 29 des Gehäuses 22 komplementär zu der Kugelfläche 56 der Kugelscheibe 50 ausgebildet, hat also den gleichen Krümmungsradius R. Ungeachtet der Winkelstellung des Gehäuses 22 gegenüber der Grundplatte 24 bleibt das Gehäuse 22 in vollflächiger Anlage an der Kugelscheibe 50 und damit - über die Planfläche 54 - sozusagen in vollflächiger Anlage an der Grundplatte 24, wenn die Achse des Verschlussbolzens 40 und die Mittelachse 36 der Schraube 30 und damit des Gehäuses 22 zwar miteinander fluchten, diese Achsen zu der Grundplatte 24 aber nicht rechtwinkelig sind.

Die Montage des Haltenockens 20 nach der Erfindung unterscheidet sich von der Montage des genormten Haltenockens der eingangs genannten Art hauptsächlich dadurch, dass zwischen dem Gehäuse 22 und der Grundplatte 24 noch die Kugelscheibe 50 einzufügen ist. Vor der Montage ist das Gehäuse 22 an dem zu den Tragvorsprüngen 32 entgegengesetzten Ende vollkommen zylindrisch, d.h. so ausgebildet, wie es in Fig. 11 dargestellt ist, aber nicht so, wie es in den Fig. 7 und 8 dargestellt ist. Bei der Montage wird nämlich zunächst die Schraube 30 zusammen mit zwei Schraubendruckfedern 60 und 62 kleinen bzw. großen Durchmessers und zwei auf ihren einander zugewandten Stirnflächen verzahnt ausgebildeten Zahnscheiben 64 und 66 in das Gehäuse 22 eingeführt. Das Gehäuse 22 hat an seiner Innenseite zwei einander diametral gegenüberliegende Nuten 68, 70. Die Schraube 30 und die Zahnscheibe 64 haben jeweils zwei einander diametral gegenüberliegende radiale Vorsprünge 72 bzw. 74, wobei von den beiden Vorsprüngen 72 in Fig. 8 nur einer sichtbar ist. Die Vorsprünge 72 und 74 werden bei der Montage in die Nuten 68, 70 eingeführt und verhindern eine Drehung der Schraube 30 bzw. der Zahnscheibe 64. Wenn die Schraube 30 so weit in das Gehäuse 22 eingeführt ist, wie es in Fig. 7 dargestellt ist, wird der äußere Umfangsrand des Gehäuses 72, der zunächst zylindrisch ausgebildet ist, nach innen verprägt, wie es in den Fig. 7 und 8 gezeigt ist, um die Schraube 30 in dem Gehäuse 22 einzuschließen. Die Zahnscheibe 64 bleibt dabei axial verschiebbar; ebenso die Zahnscheibe 66, mit deren Verzahnung die Verzahnung der Zahnscheibe 64 in lösbarem formschlüssigem Eingriff ist. Die Zahnscheibe 66 hat an ihrer in der Darstellung in Fig. 8 unteren Stirnseite zwei Rastnasen, die mit einer Nut 46 in der Stirnfläche des Verschlussbolzens 40 formschlüssig in Eingriff gelangen, wenn der Verschlussbolzen 40 auf die Schraube 30 des Haltenockens 20 aufgeschraubt wird. Zum Drehen hat der Verschlussbolzen 40 an dem zu der Nut 46 entgegengesetzten Ende einen Torx-Angriff 48. Der Verschlussbolzen 40 nimmt bei seiner Drehung die Zahnscheibe 66 mit. Während der Drehung der Zahnscheibe 66 kann die Zahnscheibe 64 aufgrund der Druckfedern 60 und 62 in axial entgegengesetzter Richtung ausweichen, so dass die Zahnscheibe 66 über die Zahnscheibe 64 ratscht, bis der Verschlussbolzen 40 seine Endstellung erreicht hat. Der am Schluss verbleibende, elastisch vorgespannte gegenseitige Eingriff der Verzahnungen der Zahnscheiben 64, 66 gewährleistet, dass sich die Verschraubung zwischen Verschlussbolzen 40 und Haltenocken 20 auch bei stärkster Beanspruchung oder Vibration des Drehverschlusses 15 nicht ungewollt lösen kann. Die für die Verdrehsicherung des Verschlussbolzens 40 erforderliche elastische Vorspannung wird durch die Druckfedern 60, 62 erzeugt.

Die Grundplatte 24 hat zwei in etwa rechtwinkelig abgebogene Tragösen, in denen die einander diametral gegenüberliegenden Tragöffnungen 34 ausgebildet sind. Nacheinander werden die Kugelscheibe 50 mit ihren Tragvorsprüngen 52 und das Gehäuse 22, in welchem die vorstehend beschriebenen Bauteile montiert worden sind, mit seinen Tragvorsprüngen 32 ebenfalls in die Tragöffnungen 34 eingeführt. Die Tragvorsprünge 52 und 32 können auf einer Seite in die Tragöffnung 34 eingeführt werden. Anschließend kann auf der gegenüberliegenden Seite mit den gegenüberliegenden Tragvorsprüngen 52 und 32 auf die ihnen benachbarte Tragöse Druck ausgeübt werden, wobei die Tragöse elastisch ausweicht und die Tragvorsprünge 52 und 32 passieren lässt, bis sie in der zugeordneten Tragöffnung 34 aufgenommen sind. Das Spiel zumindest der Tagvorsprünge 32 in den Tragöffnungen 34 wird dabei so bemessen, dass das Gehäuse 22 gegen eine sich durch die Mitte der Tragplatte 24 und der Tragöffnungen 34 erstreckende Mittenebene und um eine sich quer zu der Mittenebene erstreckende Achse jeweils insgesamt um bis zu 10° verschwenkbar ist. In der genannten Mittenebene liegt die Schnittlinie VII-VII nach Fig. 6 für die Schnittansicht in Fig. 7.

Die in das Gehäuse 22 eingesetzte Schraube 30 besteht aus einem hochfesten Werkstoff, vorzugsweise aus einem hochfesten rostfreien Stahl, der für das Herstellen des Außengewindes 44 kalt verformbar ist. Das durch Kaltverformung hergestellte Außengewinde 44 wird anschließend gehärtet und zusätzlich mit Gleitlack beschichtet. Geeignet ist z. B. der Werkstoff 1.4016/DIN EN 10263-5. Der Verschlussbolzen 40 besteht vorzugsweise ebenfalls aus rostfreiem Stahl, wobei aber eher ein Stahl eingesetzt wird, der spanend bearbeitbar ist. Ein geeigneter Werkstoff für die Grundplatte 24 ist der Werkstoff 1.4301/EN 10088-3.

### Bezugszahlenliste

- 15: Drehverschluss
- 16: Bauteil
- 17: Bauteil
- 20: Haltenocken
- 22: Gehäuse
- 23: stirnseitige Öffnung
- 24: Grundplatte
- 25: Nieten
- 26: Scheibe
- 27: Scheibe
- 28: Federring
- 29: Auflagefläche
- 30: Schraube
- 32: Tragvorsprünge
- 34: Tragöffnungen
- 36: Mittelachse
- 40: Verschlussbolzen
- 41: Bohrung
- 42: Innengewinde
- 44: Außengewinde
- 46: Nut
- 48: Torx-Angriff
- 50: Kugelscheibe
- 52: Tragvorsprünge
- 54: Planfläche
- 56: Kugelfläche
- 60: Druckfeder
- 62: Druckfeder
- 64: Zahnscheibe
- 66: Zahnscheibe
- 68: Nut
- 70: Nut
- 72: radiale Vorsprünge
- 74: radiale Vorsprünge

## Patentansprüche

1. Haltenocken für einen Drehverschluss zum Verbinden von Bauteilen, wobei der Haltenocken ein Gehäuse aufweist, das an einer Grundplatte schwenkbar gelagert ist, über die der Haltenocken fest mit einem der Bauteile verbindbar ist, und in das eine Schraube drehfest eingesetzt ist, auf die ein mit einem anderen der Bauteile drehbar verbundener Verschlussbolzen aufschraubbar ist,
wobei der Schraube wenigstens ein Federelement zum Erzeugen einer elastischen Vorspannung für eine Verdrehsicherung des Verschlussbolzens zugeordnet ist,
**dadurch gekennzeichnet, dass** sich das Gehäuse (22) an der Grundplatte (24) über eine Kugelscheibe (50) schwenkbar abstützt, dass das Gehäuse (22) an einer der Grundplatte (24) benachbarten stirnseitigen Öffnung (23) mit einander diametral gegenüberliegenden Tragvorsprüngen (32) versehen ist, die in benachbarte Tragöffnungen (34) der Grundplatte (24) eingreifen, und dass eine sich um die stirnseitige Öffnung (23) erstreckende Auflagefläche (29) des Gehäuses (22) komplementär zu einer Kugelfläche (56) der Kugelscheibe (50) ausgebildet ist.

2. Haltenocken nach Anspruch 1, **dadurch gekennzeichnet, dass** die Kugelscheibe (50) mit einander diametral gegenüberliegenden weiteren Tragvorsprüngen (52) versehen ist, die auch in die Tragöffnungen (34) der Grundplatte (24) eingreifen.

3. Haltenocken nach Anspruch 1 oder 2, **dadurch gekennzeichnet, dass** das Gehäuse (22) gegen eine sich durch die Mitte der Tragplatte (24) und der Tragöffnungen (34) erstreckende Mittenebene um insgesamt 10° verschwenkbar ist.

4. Haltenocken nach Anspruch 3, **dadurch gekennzeichnet, dass** das Gehäuse (22) um eine sich quer zu der Mittenebene erstreckende Achse um insgesamt 10° verschwenkbar ist.

5. Haltenocken nach Anspruch 3 oder 4, **dadurch gekennzeichnet, dass** die Verschwenkbarkeit des Gehäuses (22) durch ausreichendes Spiel wenigstens der Tragvorsprünge (32) des Gehäuses (22) in den Tragöffnungen (34) der Grundplatte (24) ermöglicht wird.

6. Haltenocken nach einem der vorhergehenden Ansprüche, **dadurch gekennzeichnet, dass** die in das Gehäuse (22) eingesetzte Schraube (30) aus einem hochfesten Werkstoff besteht.

## Claims

1. A retaining cam for a rotary fastener for connecting components, wherein the retaining cam has a housing which is mounted pivotably on a base plate by way of which the retaining cam can be securely connected to one of the components, and in which a screw is inserted in a manner precluding relative rotation, on to which a fastener pin can be screwed which is rotatably connected to another one of the components,
wherein the screw is associated with at least one spring element to generate an elastic biasing for preventing the fastener pin from undergoing relative rotation,
**characterised in that** the housing (22) is pivotably supported on the base plate (24) via a spherical washer (50), **in that** at an end-face opening (23) adjacent the base plate (24) the housing (22) is provided with diametrically opposed support projections (32) which engage in adjacent support openings (34) of the base plate (24), and **in that** a supporting surface (29) of the housing (22) extending around the end-face opening (23) is formed complementary to a spherical surface (56) of the spherical washer (50).

2. A retaining cam according to Claim 1, **characterised in that** the spherical washer (50) is provided with diametrically opposed further support projections (52) which also engage into the support openings (34) of the base plate (24).

3. A retaining cam according to Claim 1 or 2, **characterised in that** the housing (22) is pivotable by a total of 10° relative to a central plane extending through the centre of the support plate (24) and the support openings (34).

4. A retaining cam according to Claim 3, **characterised in that** the housing (22) is pivotable by a total of 10° about an axis extending transversely to the central plane.

5. A retaining cam according to Claim 3 or 4, **characterised in that** the ability of the housing (22) to pivot is made possible by sufficient clearance at least of the support projections (32) of the housing (22) in the support openings (34) of the base plate (24).

6. A retaining cam according to any one of the preceding Claims, **characterised in that** the screw (3) inserted into the housing (22) is made of a high-strength material.

## Revendications

1. Came de retenue pour une fermeture à rotation servant à relier des pièces,
la came de retenue comportant un boîtier monté de manière pivotante sur une plaque de base et par laquelle la came de retenue est reliée solidairement à une pièce, et qui reçoit solidairement en rotation une vis sur laquelle se visse un goujon de fermeture relié solidairement en rotation à l'autre pièce,
la vis ayant au moins un élément de ressort générant une précontrainte élastique pour un blocage en rotation du goujon de fermeture,
came **caractérisée en ce que**
le boîtier (22) s'appuie de manière pivotante contre la plaque de base (24) par l'intermédiaire d'une coupelle sphérique (50),
dans une ouverture (23), frontale, voisine, de la plaque de base (24), le boîtier (22) comporte des parties de support en saillie (32) qui sont diamétralement opposées, et viennent prendre dans des ouvertures de support (34), voisines, de la plaque de base (24), et
une surface d'appui (29) du boîtier (22) qui s'étend autour de l'ouverture (23), côté frontal, est réalisée de façon complémentaire à la surface sphérique (56) de la coupelle sphérique (50).

2. Came de retenue selon la revendication 1,
**caractérisée en ce que**
la coupelle sphérique (50) comporte d'autres saillies (52) diamétralement opposées qui pénètrent également dans les ouvertures de support (34) de la plaque de base (24).

3. Came de retenue selon la revendication 1 ou 2,
**caractérisée en ce que**
le boîtier (22) est pivotant par rapport à un plan médian passant par le milieu de la plaque de support (24) et des orifices de support (34), sur globalement 10°.

4. Came de retenue selon la revendication 3,
**caractérisée en ce que**
le boîtier (22) peut pivoter globalement de 10° autour d'un axe transversal au plan médian.

5. Came de retenue selon les revendications 3 ou 4,
**caractérisée en ce que**
la possibilité de pivotement du boîtier (22), est assurée par un jeu suffisant au moins des parties de support en saillie (32) du boîtier (22) dans les orifices de support (34) de la plaque de base (24).

6. Came de retenue selon l'une des revendications précédentes,
**caractérisée en ce que**
la vis (30) placée dans le boîtier (22) est en matériau très résistant.
